(19) Europäisches Patentamt
European Patent Office
Office européen des brevets

(11) **EP 3 739 267 B1**

(12) **EUROPÄISCHE PATENTSCHRIFT**

(45) Veröffentlichungstag und Bekanntmachung des Hinweises auf die Patenterteilung:
**27.03.2024 Patentblatt 2024/13**

(21) Anmeldenummer: **20169841.2**

(22) Anmeldetag: **16.04.2020**

(51) Internationale Patentklassifikation (IPC):
**F24D 19/10** *(2006.01)*     **G05D 23/19** *(2006.01)*

(52) Gemeinsame Patentklassifikation (CPC):
**F24D 19/1009; F24H 15/254; F24H 15/258; F24H 15/31; G05D 23/1931;** F24D 2220/042; F24H 15/176; F24H 15/395; F24H 15/45

(54) **VERFAHREN UND REGELEINHEIT ZUM REGELN EINES HEIZKREISES**

METHOD AND CONTROL UNIT FOR CONTROLLING A HEATING CIRCUIT

PROCÉDÉ ET UNITÉ DE RÉGLAGE D'UN CIRCUIT DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2019 DE 102019206328**

(43) Veröffentlichungstag der Anmeldung:
**18.11.2020 Patentblatt 2020/47**

(73) Patentinhaber: **Robert Bosch GmbH**
**70442 Stuttgart (DE)**

(72) Erfinder: **Gauger, Stephan**
**72587 Roemerstein (DE)**

(56) Entgegenhaltungen:
EP-A1- 1 300 634          EP-A1- 1 600 697
EP-A2- 0 730 213          WO-A1-2018/192307
AT-B- 412 819             DE-A1- 3 300 082
DE-B3-102005 033 497

**Beschreibung**

Die Erfindung betrifft ein Verfahren zum Regeln einer Vorlauftemperatur in einem Heizkreis. Die Erfindung betrifft außerdem eine Regeleinheit zum Regeln der Vorlauftemperatur in einem Heizkreis.

Stand der Technik

Mit der DE 3300082 A1 ist ein Verfahren und eine Einrichtung zum Optimieren der Heizkurve einer Heizungsanlage bekannt geworden. Dort wird vorgeschlagen, für die Verknüpfung von Außentemperatur und Heizungsvorlauftemperatur Einheitskurvenbüschel mit mindestens zwei Heizkurven unterschiedlicher Krümmungsfunktionen vorzugeben. Zum Optimieren der Heizkurve soll die Raumtemperatur gefühlt und ihre Abweichungen daraufhin ausgewertet werden, ob sie tolerierbar sind oder nicht. Dies ist ein empirischer Ansatz, der sich nicht oder nur sehr ungenügend automatisieren lässt.

Die Dokumente DE 33 00 082 A1, AT 412 819 B, EP 1 300 634 A1 und DE 10 2005 033497 B3 offenbaren ein Verfahren zur Regelung einer Vorlauftemperatur in einem Heizkreislauf nach dem Oberbegriff von Anspruch 1.

Offenbarung der Erfindung

Vorteile

Das erfindungsgemäße Verfahren nach Anspruch 1 zeichnet sich dadurch aus, dass durch die Verknüpfung der beanspruchten Parameter, die einfach zu erfassen sind, Gemeine automatische Regelung stattfinden kann. Ferner ist die Regelung an sich ändernde Einflüsse automatisch anpassbar.

Unter einer Wärmequelle soll eine Heizeinrichtung verstanden werden, mittels der in einem Heizkreis ein Heizfluid auf eine bestimmte Vorlauftemperatur gebracht werden kann. Typische Wärmequellen können Gas- oder Ölbrenner, Wärmepumpen, Solaranlagen, Brennstoffzellen usw. sein. Unter einer Wärmesenke versteht man in einem Heizkreis Wärme abgebende Einrichtungen wie beispielsweise Radiatoren, Fußbodenheizungen, Handtuchwärmer usw. Eine solche Wärmesenke stellt für einen zu beheizenden Raum wiederum eine Wärmequelle dar.

Durch die in den Unteransprüchen angegebenen Merkmale sind vorteilhafte Weiterbildungen des erfindungsgemäßen Verfahrens möglich. Gemäß der Erfindung können den Raum charakterisierende Eigenschaften einfach eingebracht werden, wenn ein die Umgebung des mindesten einen Raumes berücksichtigender Parameter (P) bestimmt wird und bei der Steuerung oder Regelung einfließt.

Ein bzw. der den Raum charakterisierende Parameter (P) ist am sichersten während eines stationären Betriebs zu bestimmen. Unter stationären Betrieb soll ein Betrieb verstanden werden, bei dem sich über einen gewissen Zeitraum Außentemperatur und Raumtemperatur nicht oder nur geringfügig ändern. Je nach Qualitätsanforderungen kann sich der Zeitraum im Bereich von wenigen Minuten, zum Beispiel zwischen 5 und 15 Minuten bewegen, oder auch in den Bereich einer halben Stunde bis zu einer ganzen Stunde ausgedehnt werden. Unter einer geringen Abweichung ist zu verstehen, dass die Abweichung maximal so groß ist, dass sie auf das Regelverfahren für einen Menschen keinen merklichen Einfluss nimmt. Typische Abweichungen liegen hier unterhalb von 1K.

Gemäß der Erfindung charakterisiert der Parameter (P) den Raum bzw. eine Umgebung des Raums dann besonders gut, wenn der Parameter (P) vom Verhältnis von Wärmedurchgangskoeffizienten der Außenflächen des Raumes und der Wärmesenken zum einen und von der Größe der Außenflächen des Raumes und der Fläche der Wärmesenke zum anderen abhängt.

Sind die Außentemperatur, die Raumtemperatur, die aktuelle Vorlauftemperatur sowie die relative Stellung eines die Wärmesenke beeinflussenden Stellorgans bekannt, was sich zum Beispiel durch Messungen ermitteln lässt, lässt sich der Parameter (P) einfach über folgende Beziehung ermitteln bzw. bestimmen:

$$P = (Pos_{Ventil} \times (T_{Vorlauf} - T_{Raum})) / (T_{Raum} - T_{Außen})$$

mit

$T_{Raum}$ = Raumtemperatur
$T_{Außen}$ = Außentemperatur
$T_{Vorlauf}$ = Vorlauftemperatur
$Pos_{Ventil}$ = relative Stellung eines einen Durchfluss durch eine Wärmesenke beeinflussenden Stellorgans

Sind die Raumsolltemperatur, die Raumtemperatur, die Außentemperatur sowie eine relative Ziel-Stellung eines einen Durchfluss durch die Wärmesenke beeinflussenden Stellorgans bekannt, was in einfacher Weise zu ermitteln ist, und sind die Wärmedurchgangskoeffizienten der Außenflächen bzw. der Wärmesenken sowie die absoluten Flächen der Außenwände des Raumes bzw. der Fläche der Wärmesenke bekannt, lässt sich eine Vorlaufsolltemperatur über folgende Beziehung einfach ermitteln bzw. bestimmen:

$$T_{Vorlaufsoll} = T_{Raumsoll} + ((T_{Raum} - T_{Außen}) \times (k_G \times A_G)) / ((k_V \times A_V) \times Pos\text{-}Ziel_{Ventil})$$

mit

$T_{Vorlaufsoll}$ = Vorlaufsolltemperatur
$T_{Raumsoll}$ = Raumsollsolltemperatur
$T_{Außen}$ = Außentemperatur
$Pos\text{-}Ziel_{Ventil}$ = relative Ziel-Stellung eines einen Durchfluss durch die Wärmesenke beeinflussenden Stellorgans
$k_V$ = Wärmedurchgangskoeffizienten der Außenflächen
$A_V$ = Fläche der Außenflächen
$k_G$ = Wärmedurchgangskoeffizienten der Wärmesenken
$A_G$ = Fläche der Wärmesenken

Die relative Zielstellung $Pos\text{-}Ziel_{Ventil}$ eines einen Durchfluss durch die Wärmesenke beeinflussenden Stellorgans ist eine vorgebbare Stellung. Die Werte bewegen sich zwischen 0 und 1, wobei 0 einer geschlossenen Stellung und 1 einer völlig geöffneten Stellung entspricht. Soll keine Einstellung vorgegeben werden, kann auch die aktuell vorliegende Stellung eingebracht werden.

Sind die Raumsolltemperatur, die Außentemperatur, die relative Ziel-Stellung eines einen Durchfluss durch die Wärmesenke beeinflussenden Stellorgans sowie der Parameter (P) bekannt, lässt sich eine Vorlaufsolltemperatur einfach ermitteln durch die Beziehung:

$$T_{Vorlaufsoll} = P \times ((T_{Raumsoll} - T_{Außen}) / Pos\text{-}Ziel_{Ventil})$$

mit

$T_{Vorlaufsoll}$ = Vorlaufsolltemperatur
$T_{Raumsoll}$ = Raumsollsolltemperatur
$T_{Außen}$ = Außentemperatur
$Pos\text{-}Ziel_{Ventil}$ = relative Soll-Stellung eines einen Durchfluss durch die Wärmesenke beeinflussenden Stellorgans

Sollen mehrere Räume mit mehreren Wärmesenken gesteuert oder geregelt werden, hat es sich als vorteilhaft erwiesen, wenn ein Raum nach einem der vorhergehenden Verfahren gesteuert oder geregelt wird und ein zusätzlicher oder mehrere zusätzliche Räume so geregelt werden, dass deren relative Stellung eines jeweiligen Stellorgans der Wärmesenken abhängig von der bestimmten Vorlauftemperatur gesteuert oder geregelt werden.

Der Komfort kann erhöht werden, wenn für mehrere zu regelnden Räume jeweils eine Vorlaufsolltemperatur bestimmt wird.

Sind mehrere Vorlaufsolltemperaturen ermittelt worden, kann in einfacher Weise eine maximale Vorlaufsolltemperatur bestimmt werden.

Ein einfaches Verfahren ergibt sich, wenn für mehrere zu regelnden Räume ausgehend von einer vorbestimmten Vorlaufsolltemperatur, insbesondere einer maximalen Vorlaufsolltemperatur oder einer aktuellen Vorlauftemperatur, eine relative Soll-Stellung eines Stellorgans der Wärmesenke ermittelt und eingestellt wird.

Sind die Raumsolltemperatur die Außentemperatur sowie die Vorlaufsolltemperatur bzw. die maximale Vorlaufsolltemperatur bekannt und ist darüber hinaus der Parameter (P) bekannt, kann die relative Soll-Stellung eines den Durchfluss durch die Wärmesenke beeinflussenden Stellorgans durch die Beziehung ermittelt werden:

$$Pos\text{-}soll_{Ventil} = P \times (T_{Raumsoll} - T_{Außen}) / T_{Vorlaufsoll}$$

mit

$Pos\text{-}soll_{Ventil}$ = relative Soll-Stellung eines einen Durchfluss durch die Wärmesenke beeinflussenden Stellorgans

$T_{Vorlaufsoll}$ = Vorlaufsolltemperatur
$T_{Raumsoll}$ = Raumsollsolltemperatur
$T_{Außen}$ = Außentemperatur

Die relative Soll-Stellung des Stellorgans unterschiedlicher Räume kann einfach bestimmt werden nach

$$\text{Pos-soll}_{Ventil}(n) = (T_{Vorlaufsoll}(n) - T_{Raum}(n)) / (\max(T_{Vorlaufsoll}(n)) - T_{Raum}(n))$$

mit

n = Nummerierung der Räume, n ist eine natürliche Zahl
$T_{Vorlaufsoll}(n)$ = Vorlaufsolltemperatur für den Raum mit der Nummer n
$T_{Raum}(n)$ = aktuelle Raumtemperatur des Raumes mit der Nummer n
$\max(T_{Vorlaufsoll}(n))$ = maximale Vorlauftemperatur ermittelt aus den Vorlauftemperaturen der Räume 1 bis n

Oder auch über

$$\text{Pos-soll}_{Ventil}(n) = (T_{Vorlaufsoll}(n) - T_{Raum}(n)) / (T_{Vorlauf}(n) - T_{Raum}(n))$$

mit

n = Nummerierung der Räume, n ist eine natürliche Zahl
$T_{Vorlaufsoll}(n)$ = Vorlaufsolltemperatur für den Raum mit der Nummer n
$T_{Raum}(n)$ = aktuelle Raumtemperatur des Raumes mit der Nummer n
$T_{Vorlaufl}(n)$ = aktuelle Vorlauftemperatur des Raumes mit der Nummer n

Die Erfindung betrifft auch eine Regeleinheit zum Regeln eines Heizkreises, der zumindest eine Wärmequelle und zumindest eine in mindesten einem Raum angeordnete Wärmesenke aufweist, wobei die Regeleinheit einen Geber aufweist und/oder mit einem Geber verbunden ist, der einen Wert für eine Außentemperatur zur Verfügung stellt, und wobei die Regeleinheit eine Vorlauftemperatur abhängig von der Außentemperatur steuert oder regelt. Sie zeichnet sich dadurch, dass

die Regeleinheit einen weiteren Geber aufweist und/oder mit einem weiteren Geber verbunden ist, der einen Wert für eine Raumtemperatur zur Verfügung stellt,
und dass die Regeleinheit die Vorlauftemperatur abhängig von der Außentemperatur und der Raumtemperatur, nach einem Verfahren nach einem der vorhergehenden Ansprüche, steuert oder regelt.

Eine Ausführung sieht in vorteilhafter Weise vor, dass die Regeleinheit mit einem oder mehreren Aktoren verbunden ist und eine relative Stellung eines einen Durchfluss durch die Wärmesenke beeinflussenden Stellorgans steuert oder regelt.

Zeichnung

In der Zeichnung sind erfindungsgemäße Verfahren sowie ein Heizkreis dargestellt und in der nachfolgenden Beschreibung näher erläutert. Es zeigen:

Figur 1 einen Heizkreis, in dem das erfindungsgemäße Verfahren angewendet wird
Figuren 2 und 3 erfindungsgemäße Verfahren.

Beschreibung

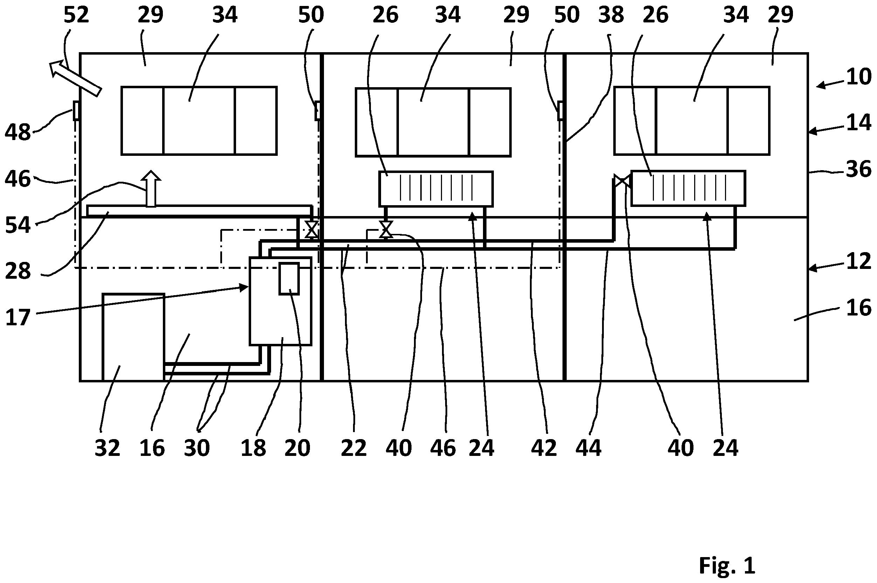

In Figur 1 ist schematisch ein Gebäude 10 zu sehen mit einem Kellergeschoss 12 und einem Erdgeschoss 14. In einem Kellerraum 16 ist eine Wärmequelle 17 in der Form einer Heiztherme 18 mit einer Regeleinheit 20 untergebracht. Im Ausführungsbeispiel ist die Regeleinheit 20 integraler Bestandteil der Heiztherme 18. Es ist jedoch auch möglich, die Regeleinheit 20 als ein in die Heiztherme 18 integrierbares Modul oder als eine selbständige Einheit bereitzustellen. In modernen Anlagen kann die Regeleinheit auch Bestandteil einer Smarthome-Anlage sein.

Die Heiztherme 18 ist über einen Heizkreis 22 mit Wärmesenken 24 verbunden. Die Wärmesenken 24 sind als Radiatoren 26 oder als Fußbodenheizung 28 ausgestaltet. Im Ausführungsbeispiel sind verschiedene Räume 29 eingezeichnet und jeder Raum 29 weist eine Wärmesenke 24 auf. Es können jedoch auch mehrere Wärmesenken 24 vorhanden sein. Ferner ist erkennbar, dass jeder Raum 29 ein Fenster 34 aufweist sowie von Außenwänden 36 und Innenwänden 38 begrenzt ist.

Die Heiztherme 18 ist über einen Speicherkreislauf 30 mit einem Warmwasserspeicher 32 verbunden. Dessen weitere Vernetzung im Gebäude ist nicht dargestellt.

Die Wärmesenken 24 sind mit dem Heizkreis 22 jeweils über ein Stellorgan 40 verbunden. Solche Stellorgane 40 sind im einfachsten Fall Thermostaten, die ein Ventilglied über einen Aktuator bewegen und damit den Durchfluss eines im Heizkreis 22 fließenden Heizmedium zur Wärmesenke 24 beeinflussen. Als Aktuatoren werden üblicherweise Ausdehnungskörper, Magnetsteller, motorische Steller oder dergleichen eingesetzt. In der Regel werden Ausdehnungskörper verwendet, um eine automatische Anpassung aufgrund der Raumtemperatur vorzunehmen. Magnetsteller und motorische Steller werden eingesetzt, wenn über eine Steuer- oder Regeleinheit 20 auf die Stellorgane 40 Einfluss genommen wird.

Der Heizkreis 22 weist eine Vorlaufleitung 42 und eine Rücklaufleitung 44 auf. Die Stellorgane 40 sind mit der Vorlaufleitung 42 verbunden. Die Rückleitung aus der Wärmesenke 24 ist dann mit der Rücklaufleitung 44 verbunden. Dadurch entsteht ein paralleles hydraulisches Netzwerk.

Die Regeleinheit 20 zum Regeln des Heizkreises 22 ist über eine Signalleitung 46 mit einem Geber 48 verbunden, der die Außentemperatur misst und einen Außentemperaturwert $T_{Außen}$ an die Regeleinheit 20 weitergibt.

Im Ausführungsbeispiel ist der Geber 48 also als Außentemperaturfühler ausgebildet. Er könnte aber auch als eine Einrichtung ausgebildet sein, die direkt oder indirekt über weitere Geräte mit dem Internet Kontakt aufnimmt und auf diese Weise einen Wert für die Außentemperatur erhält. Ein solcher Geber 48 kann direkt in oder bei der Regeleinheit 20 verbaut oder Teil eines Computers sein.

In den Räumen 29 sind jeweils weitere Geber 50 installiert, die ebenfalls über Signalleitungen 46 mit der Regeleinheit 20 kommunizieren. Die Geber 50 sind als Temperatursensoren ausgebildet und ermitteln jeweils die Raumtemperatur $T_{Raum}$, die dann der Regeleinheit 20 zur Verfügung gestellt wird.

Im Ausführungsbeispiel erfolgt die Verbindung über die Signalleitungen 46. Hier kann aber auch ein drahtloses Netzwerk eingesetzt werden. Im Ausführungsbeispiel sind auch mehrere Räume 29 gezeigt. Es kann jedoch auch nur ein einzelner Raum 29 mit einer zu steuernden oder zu regelnden Wärmesenke 24 vorhanden sein. Ferner ist es möglich, dass zwar mehrere Räume 29 mit Wärmesenken 24 vorhanden sind, dass aber nur eine Wärmesenke 24 oder einige Wärmesenken 24 mit steuerbaren oder regelbaren Stellorganen 40 ausgestattet sind.

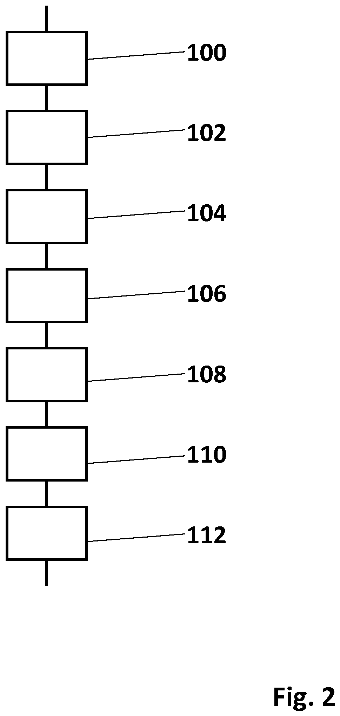

In Figur 2 ist ein Verfahren zum Regeln einer Vorlauftemperatur $T_{Vorlauf}$ in einem Heizkreis 22 in Form eines Flussdiagramms dargestellt. Der Heizkreis 22 weist zumindest eine Wärmequelle 17 und zumindest eine in mindestens einem Raum 29 angeordnete Wärmesenke 24 auf.

Nach einem Beginn 100, bei dem das Verfahren in der Regeleinheit 20 als Routine oder Subroutine gestartet ist, wird in einem Schritt 102 die Außentemperatur $T_{Außen}$ ermittelt und der Regeleinheit 20 zur Verfügung gestellt. Liegen Verhältnisse vor, die im Ausführungsbeispiel nach Figur 1 beschrieben, wird die Außentemperatur $T_{Außen}$ vom Geber 48 ermittelt und über die Signalleitung 46 der Regeleinheit 20 zugeführt. Die Außentemperatur $T_{Außen}$ stellt einen Wert dar, der benutzt werden kann, um eine Vorlauftemperatur $T_{Vorlauf}$ in einem Heizkreis 22 zu steuern oder zu regeln.

Unter einer Vorlauftemperatur in einem Heizkreis wird die Temperatur verstanden, auf die eine Heiztherme ein Heizfluid erwärmt, das dann über eine Vorlaufleitung in einem Heizkreis strömt.

In einem Schritt 104 wird in einem Raum 29 die Raumtemperatur $T_{Raum}$ ermittelt und ebenfalls der Regeleinheit 20 zur Verfügung gestellt. Auch die Raumtemperatur $T_{Raum}$ stellt einen Wert dar, der benutzt werden kann, um eine Vorlauftemperatur $T_{Vorlauf}$ in einem Heizkreis 22 zu steuern oder zu regeln. Erfindungsgemäß fließt nun sowohl die Außentemperatur $T_{Außen}$ als auch die Raumtemperatur $T_{Raum}$ in die Steuerung bzw. Regelung der Vorlauftemperatur $T_{Vorlauf}$ im Heizkreis 22 ein.

In einem weiteren Schritt 106 wird ein die Umgebung des mindestens einen Raumes 29 berücksichtigender Parameter P bestimmt. Dieser Parameter P fließt dann in die Steuerung bzw. Regelung der Vorlauftemperatur $T_{Vorlauf}$ mit ein. Unter der Umgebung des mindestens einen Raumes soll sowohl die örtliche Umgebung als auch der Wärmeaustausch mit dieser örtlichen Umgebung verstanden werden.

Im Ausführungsbeispiel wird der Parameter P während eines stationären Betrieb der Heizanlage bestimmt. Der Erfindung liegt die Erkenntnis zugrunde, dass die Raumtemperatur $T_{Raum}$ maßgeblich von der Wärmebilanz abhängt. In die Wärmebilanz fließen Wärmeverluste 52 und Wärmegewinne 54 (siehe Figur 1) ein.

Wärmeverluste 52 entstehen durch Wärmeabgabe in der Regel durch die Außenwände. Wärmeverluste können berechnet werden:

$$1) \quad dQ_V/dt = k_V \times A_V \times (T_{Raum} - T_{Außen}),$$

mit V für Verlust

Wärmegewinne 54 erhält man durch von Radiatoren 26 oder einer Fußbodenheizung 28 abgegebener Wärme. Wärmegewinne können berechnet werden:

$$(2) \quad dQ_G/dt = k_G \times A_G \times (T_{Vorlauf} - T_{Raum}),$$

mit G für Gewinne

Die Gleichung (2) gilt für unendlich großen Vorlauf. Wird die aktuelle Situation des Wärmeübertragers einer Wärmesenke 24 berücksichtigt, folgt:

$$(3) \quad dQ_G/dt = k_G \times A_G \times (T_{Wärmeübertrager} - T_{Raum})$$

Wird das versorgende Ventil, also das Stellorgan 40, gedrosselt, gilt für die Temperatur des Wärmeübertragers im stationären Zustand:

$$(4) \quad T_{Wärmeübertrager} = T_{Raum} + Pos_{Ventil} \times (T_{Vorlauf} - T_{Raum}),$$

mit $Pos_{Ventil}$ zwischen 0 und 1

Bei unendlich großem Vorlauf nimmt der Wärmeübertrager bei völlig geöffnetem Ventil die Vorlauftemperatur an, bei geschlossenem Ventil die des Raumes. Benutzt man nun die Erkenntnis der Gleichung (4) in der Gleichung (3) erhält man:

$$(4) \text{ in } (3) \quad dQ_G/dt = k_G \times A_G \times ((T_{Raum} + Pos_{Ventil} \times (T_{Vorlauf} - T_{Raum})) - T_{Raum})$$

Oder vereinfacht:

$$(5) \quad dQ_G/dt = k_G \times A_G \times Pos_{Ventil} \times (T_{Vorlauf} - T_{Raum})$$

Im stationären Fall sind Verluste gleich Gewinne:

$$(6) \quad dQ_V/dt = dQ_G/dt$$

Mit (1) und (5) in (6):

$$(7) \quad k_V \times A_V \times (T_{Raum} - T_{Außen}) = k_G \times A_G \times Pos_{Ventil} \times (T_{Vorlauf} - T_{Raum})$$

Umgeformt:

$$(8) \quad (k_V \times A_V) / (k_G \times A_G) = (Pos_{Ventil} \times (T_{Vorlauf} - T_{Raum})) / (T_{Raum} - T_{Außen})$$

Damit kann das Verhältnis $(k_V \times A_V) / (k_G \times A_G)$ als Wert für den stationären Fall bestimmt werden. Hiermit kann ein Parameter P definiert werden, mit

$$(9) \qquad P = (k_V \times A_V) / (k_G \times A_G)$$

Der Parameter P repräsentiert also die Umgebung eines Raumes, insbesondere stoffliche Eigenschaften, wie Wärmedurchgangswerte, aber auch geometrische Werte, wie die beim Wärmeaustausch aktiven Flächen.

Im stationären Fall kann der Parameter P einfach bestimmt werden:
(9) in (8)

$$(10) \qquad P = (Pos_{Ventil} \times (T_{Vorlauf} - T_{Raum})) / (T_{Raum} - T_{Außen})$$

Der Parameter P beinhaltet, wie oben erläutert, nur schwer zugänglichen Größen, wie die Flächen der Außenwände oder der Wärmesenken sowie deren spezifischen Wärmedurchgangskoeffizienten. Diese stellen wärmetechnisch die Umgebung eines zu beheizten Raumes 29 dar. Über die oben angegebene Beziehung (10) ist es nun möglich, den Parameter P im stationären Fall durch einfach zu ermittelnden Messgrößen zu bestimmen.

Um den Parameter P automatisch zu bestimmen, werden in der Regeleinheit 20 die Außentemperatur $T_{Außen}$ und die Raumtemperatur $T_{Raum}$ gemessen und auf Veränderungen überwacht. Sind keine Veränderungen feststellbar oder nur in zu vernachlässigender Größe, werden die Werte der Vorlauftemperatur TVorlauf sowie der aktuellen Position $Pos_{Ventil}$ des Stellorgans 40 ermittelt und darüber der Parameter P bestimmt. Dieser Parameter P wird dann benutzt, um eine Vorlaufsolltemperatur der Heizanlage zu bestimmen.

In einem Schritt 108 des Verfahrens wird dann ein Sollwert für die Vorlauftemperatur $T_{Vorlaufsoll}$ bestimmt. Sind die aktuellen Werte der Flächen der Außenflächen, der Flächen der Wärmesenken sowie deren Wärmedurchgangskoeffizienten bekannt, lässt sich darüber ein Sollwert für die Vorlauftemperatur $T_{Vorlaufsoll}$ bestimmen. Als weitere Angaben werden die Raumsolltemperatur $T_{Raumsoll}$ benötigt sowie eine Zielposition Pos-Ziel$_{Ventil}$ des Stellorgans 40. Diese Zielposition Pos-Ziel$_{Ventil}$ kann in Abhängigkeit des Heizungssystems parametrisiert werden. Um zum Beispiel die Vorlauftemperatur möglichst gering zu halten, kann ein relativer Zahlenwert von 100% vorgegeben werden. Die Vorlaufsolltemperatur $T_{Vorlaufsoll}$ wird bestimmt über:

$$(11) \qquad T_{Vorlaufsoll} = T_{Raumsoll} + ((T_{Raum} - T_{Außen}) \times (k_G \times A_G)) / ((k_V \times A_V) \times Pos\text{-}Ziel_{Ventil})$$

Sind die oben genannten Werte für die Flächen und Koeffizienten nicht bekannt, kann der Parameter P, wie oben beschrieben, ermittelt und darüber dann ein Sollwert für die Vorlauftemperatur $T_{Vorlaufsoll}$ bestimmt werden. Auch hier fließt die Raumsolltemperatur sowie eine Position des Stellorgans 40 ein.

$$(12) \qquad T_{Vorlaufsoll} = P \times ((T_{Raumsoll} - T_{Außen}) / Pos\text{-}Ziel_{Ventil})$$

Ist die Vorlaufsolltemperatur $T_{Vorlaufsoll}$ bestimmt, wird die Heiztherme 18 in einem Schritt 110 so geregelt, dass sich der aktuelle Wert der Vorlauftemperatur $T_{Vorlauf}$ auf die Vorlaufsolltemperatur $T_{Vorlaufsoll}$ zubewegt, diese im besten Fall erreicht.

Der Parameter P kann in regelmäßigen oder unregelmäßigen Abständen erneut ermittelt werden. Auf dieser Grundlage können dann neue Sollwerte bestimmt und die Regelung aktualisiert werden. Solche Abstände können im Bereich von Minuten, Stunden oder auch Tage sein. Je stärker sich die Umgebung ändert, um so öfters wird versucht den Parameter P zu aktualisieren. Starke Änderungen treten zum Beispiel auf, wenn Fenster längere Zeit geöffnet werden, wenn sich mehr oder weniger Personen in einem Raum befinden, wenn zusätzliche Feuerungsanlagen wie Kaminöfen in Betrieb genommen werden oder wenn zusätzliche Wärmestrahlung durch ein Fenster in den Raum gelangt. Sobald sich nach solchen geänderten Randbedingungen ein stationärer Betrieb einstellt, wird der Parameter P erneut bestimmt und zur Regelung herangezogen.

Im aktuellen Ausführungsbeispiel nach Figur 1 sind mehrere Wärmesenken 24 vorhanden, deren Stellorgane 40 gesteuert oder geregelt werden sollen. Im einfachsten Fall wird dazu wie im zuvor beschriebenen Verfahren eine Vorlaufsolltemperatur $T_{Vorlaufsoll}$ für einen Raum 29 bestimmt. Dieser Raum ist oft ein Wohnzimmer. Für die weiteren Räume 29 wird dann in einem Verfahrensschritt 112 jeweils eine Soll-Position Pos-soll$_{Ventil}$ für das Stellorgan 40 ermittelt und falls ein fernsteuerbarer Aktuator am entsprechenden Stellorgan 40 vorhanden ist, entsprechend angesteuert. Falls kein fernsteuerbarer Aktuator vorhanden ist, wird über ein Display oder eine App eine entsprechende Meldung ausgegeben.

Der Wert für die Soll-Position des Stellorgans 40 hängt von der Raumsolltemperatur, der Außentemperatur und der Vorlaufsolltemperatur ab. Er kann bestimmt werden über:

$$(13) \quad \text{Pos-soll}_{Ventil} = P \times ((T_{Raumsoll} - T_{Außen}) / T_{Vorlaufsoll}$$

Sollte sich eine berechnete Soll-Position nicht anfahren lassen oder soll ihr eine bestimmte Zielposition zukommen, wird für das Stellorgan 40 des Führungsraums eine angepasste Soll-Position vorgegeben und die Bestimmung erneut durchlaufen.

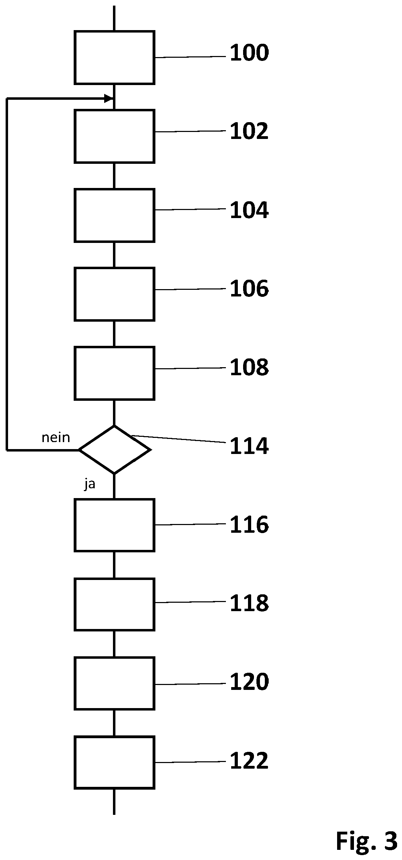

In einem zweiten Ausführungsbeispiel nach Figur 3 für ein erfindungsgemäßes Verfahren werden die Schritte 102 bis 108 für alle Räume 29, die mit einem weiteren Geber 50 sowie steuerbaren Stellorgane 40 ausgestattet sind, abgearbeitet und die jeweilig bestimmten Vorlaufsolltemperaturen in einem Speicher der Regeleinheit 20 abgelegt. In einem Schritt 114 wird abgefragt ob alle Räume abgearbeitet sind. Falls nein, werden die Schritte 102 bis 108 erneut für die noch fehlenden Räume 29 durchlaufen. Dabei werden den Räumen Nummern n zugeordnet. Über diese Nummern n sind sie dann eindeutig identifizierbar. Im Ausführungsbeispiel nach Figur 1 sind 2 Räume abzuarbeiten. Die Größe n nimmt folglich die Zahlen 1 und 2 ein.

Sind alle Räume 29 abgearbeitet, wird in einem Schritt 116 unter den gespeicherten Werten die maximale Vorlauftemperatur $\max(T_{Vorlaufsoll}(n))$ bestimmt. In einem Schritt 118 wird für jedes Stellorgan 40 nun die relative Soll-Position ermittelt über die Beziehung:

$$(14) \quad \text{Pos-soll}_{Ventil}(n) = (T_{Vorlaufsoll}(n) - T_{Raum}(n)) / (\max(T_{Vorlaufsoll}(n)) - T_{Raum}(n))$$

mit

n = Nummerierung der Räume, n ist eine natürliche Zahl
$T_{Vorlaufsoll}(n)$ = Vorlaufsolltemperatur für den Raum mit der Nummer n
$T_{Raum}(n)$ = aktuelle Raumtemperatur des Raumes mit der Nummer n
$\max(T_{Vorlaufsoll}(n))$ = maximale Vorlaufsolltemperatur ermittelt aus den Vorlauftemperaturen der Räume 1 bis n

Die Stellorgane 40 werden dann entsprechend angesteuert. Außerdem wird der Heiztherme 18 die Vorlaufsolltemperatur $\max(T_{Vorlaufsoll}(n))$ vorgegeben, sodass die Heiztherme 18 die Vorlaufsolltemperatur $T_{Vorlaufsoll}$ und damit die Vorlauftemperatur $T_{Vorlauf}$ entsprechend anpasst.

Alternativ, insbesondere wenn keine maximale Vorlaufsolltemperatur vorliegt, kann die Sollposition auch anhand der anliegenden Vorlauftemperatur bestimmt werden:

$$(15) \quad \text{Pos-soll}_{Ventil}(n) = (T_{Vorlaufsoll}(n) - T_{Raum}(n)) / (T_{Vorlaufsoll}(n) - T_{Raum}(n))$$

mit

n = Nummerierung der Räume, n ist eine natürliche Zahl
$T_{Vorlaufsoll}(n)$ = Vorlaufsolltemperatur für den Raum mit der Nummer n
$T_{Raum}(n)$ = aktuelle Raumtemperatur des Raumes mit der Nummer n
$T_{Vorlaufsoll}(n)$ = aktuelle Vorlauftemperatur des Raumes mit der Nummer n

Die Stellorgane 40 werden dann wieder entsprechend angesteuert.

Um den Parameter P zu aktualisieren kann in einem ersten Ansatz lediglich der Raum 29, dessen Vorlaufsolltemperatur $T_{Vorlaufsoll}$ der maximalen Vorlaufsolltemperatur entspricht, herangezogen werden, um den Parameter P entsprechend des Verfahrensschritts 106 zu bestimmen.

Liegen größere Änderungen der Umgebung vor, kann es notwendig sein, wieder für jeden Raum den Parameter P sowie ein Sollwert für eine Vorlauftemperatur zu ermitteln, um daraus dann die neue maximale Vorlauftemperatur erhalten. Auch dann werden jeweils wieder die Stellorgane 40 entsprechend angesteuert.

Das Verfahren und der Heizkreis sind zwar als Heizanlage beschrieben. Es liegt aber innerhalb der Erfindung, wenn die Vorlauftemperatur auf einen niederen Wert eingestellt wird, als die aktuelle Raumtemperatur. Dies ist beispielsweise möglich, wenn als Heiztherme eine Wärmepumpe eingesetzt wird, die bei entsprechender Ansteuerung auch als Klimaanlage nutzbar ist. Die genannten Wärmegewinne und Wärmeverluste würden dann mit negativem Vorzeichen in die Wärmebilanz eingehen.

Benutzte Größen:

$T_{Außen}$ = Außentemperatur
$T_{Raum}$ = Raumtemperatur
$T_{Raumsoll}$ = Raumsollsolltemperatur
$T_{Vorlauf}$ = Vorlauftemperatur
$T_{Vorlaufsoll}$ = Vorlaufsolltemperatur
$\max(T_{Vorlaufsoll}(n)$ = maximale Vorlaufsolltemperatur ermittelt aus den Vorlaufsolltemperaturen der Räume 1 bis n
$T_{Vorlaufl}(n)$ = aktuelle Vorlauftemperatur des Raumes mit der Nummer n
n = Nummerierung der Räume, n ist eine natürliche Zahl
$Pos_{Ventil}$ = relative Stellung eines einen Durchfluss durch die Wärmesenke beeinflussenden Stellorgans
$Pos\text{-}soll_{Ventil}$ = relative Soll-Stellung eines einen Durchfluss durch die Wärmesenke beeinflussenden Stellorgans
$Pos\text{-}Ziel_{Ventil}$ = relative Ziel-Stellung eines einen Durchfluss durch die Wärmesenke beeinflussenden Stellorgans
P = die Umgebung des mindesten einen Raumes berücksichtigender Parameter
$k_V$ = Wärmedurchgangskoeffizienten der Außenflächen
$A_V$ = Fläche der Außenflächen
$k_G$ = Wärmedurchgangskoeffizienten der Wärmesenken
$A_G$ = Fläche der Wärmesenken
dQv/dt = Wärmeverluste
$dQ_G/dt$ = Wärmegewinne

## Patentansprüche

1. Verfahren zum Regeln einer Vorlauftemperatur ($T_{Vorlauf}$) in einem Heizkreis (22), der zumindest eine Wärmequelle (17) und zumindest eine in mindestens einem Raum (29) angeordnete Wärmesenke (24) aufweist, wobei die Vorlauftemperatur ($T_{Vorlauf}$) abhängig von einer Außentemperatur ($T_{Außen}$) gesteuert oder geregelt wird, wobei in dem Raum (29) die Raumtemperatur ($T_{Raum}$) gemessen wird und dass die Vorlauftemperatur ($T_{Vorlauf}$) abhängig von der Außentemperatur ($T_{Außen}$) und der Raumtemperatur ($T_{Raum}$) gesteuert oder geregelt wird, **dadurch gekennzeichnet, dass** ein die Umgebung des mindesten einen Raumes (29) berücksichtigender Parameter (P) bestimmt wird und bei der Steuerung oder Regelung einfließt und dass der Parameter (P) vom Verhältnis von Wärmedurchgangskoeffizienten der Außenflächen des Raumes (29) und der Wärmesenken (24) zum einen und von der Größe der Außenflächen des Raumes (29) und der Fläche der Wärmesenke (24) zum anderen abhängt.

2. Verfahren nach Anspruch 1, **dadurch gekennzeichnet, dass** der Parameter (P) während eines stationären Betriebs bestimmt wird.

3. Verfahren nach einem der Ansprüche 1 oder 2, **dadurch gekennzeichnet, dass** der Parameter (P) bestimmt wird nach

$$P = (Pos_{Ventil} \times (T_{Vorlauf} - T_{Raum})) / (T_{Raum} - T_{Außen})$$

mit

$T_{Raum}$ = Raumtemperatur
$T_{Außen}$ = Außentemperatur
$T_{Vorlauf}$ = Vorlauftemperatur
$Pos_{Ventil}$ = relative Stellung eines einen Durchfluss durch die Wärmesenke beeinflussenden Stellorgans

4. Verfahren nach einem der vorhergehenden Ansprüche, **dadurch gekennzeichnet, dass** eine Vorlaufsolltemperatur ($T_{Vorlaufsoll}$) bestimmt wird nach

$$T_{Vorlaufsoll} = T_{Raumsoll} + ((T_{Raum} - T_{Außen}) \times (k_G \times A_G)) / ((k_V \times A_V) \times Pos\text{-}Ziel_{Ventil})$$

mit

$T_{Vorlaufsoll}$ = Vorlaufsolltemperatur
$T_{Raumsoll}$ = Raumsolltemperatur
$T_{Außen}$ = Außentemperatur
Pos-Ziel$_{Ventil}$ = relative Ziel-Stellung eines einen Durchfluss durch die Wärmesenke beeinflussenden Stellorgans
kv = Wärmedurchgangskoeffizienten der Außenflächen
$A_V$ = Fläche der Außenflächen
$k_G$ = Wärmedurchgangskoeffizienten der Wärmesenken
$A_G$ = Fläche der Wärmesenken

5. Verfahren nach einem der Ansprüche 1 bis 3, **dadurch gekennzeichnet, dass** eine Vorlaufsolltemperatur ($T_{Vorlaufsoll}$) bestimmt wird nach

$$T_{Vorlaufsoll} = P \times ((T_{Raumsoll} - T_{Außen}) / Pos\text{-}Ziel_{Ventil})$$

mit

$T_{Vorlaufsoll}$ = Vorlaufsolltemperatur
$T_{Raumsoll}$ = Raumsolltemperatur
$T_{Außen}$ = Außentemperatur
Pos-Ziel$_{Ventil}$ = relative Ziel-Stellung eines einen Durchfluss durch die Wärmesenke beeinflussenden Stellorgans

6. Verfahren nach einem der vorhergehenden Ansprüche, **dadurch gekennzeichnet, dass** mehrere Räume (29) mit mehreren Wärmesenken (24) gesteuert oder geregelt werden, wobei ein Raum (29) nach einem der vorhergehenden Ansprüche gesteuert oder geregelt wird und ein zusätzlicher oder mehrere zusätzliche Räume (29) so geregelt werden, dass deren relative Stellung eines jeweiligen Stellorgans (40) der Wärmesenke (24) abhängig von der bestimmten Vorlauftemperatur ($T_{Vorlauf}$) gesteuert oder geregelt werden.

7. Verfahren nach einem der vorhergehenden Ansprüche, **dadurch gekennzeichnet, dass** für mehrere zu regelnden Räume (29) jeweils eine Vorlaufsolltemperatur ($T_{Vorlaufsoll}$) bestimmt wird.

8. Verfahren nach Anspruch 7, **dadurch gekennzeichnet, dass** eine maximale Vorlaufsolltemperatur ($T_{Vorlaufsoll}$) ermittelt wird.

9. Verfahren nach einem der Ansprüche 7 oder 8, **dadurch gekennzeichnet, dass** für zu regelnde Räume ausgehend von einer vorbestimmten Vorlaufsolltemperatur ($T_{Vorlaufsoll}$), insbesondere einer maximalen Vorlaufsolltemperatur oder einer aktuellen Vorlauftemperatur, eine relative Soll-Stellung eines Stellorgans (40) der Wärmesenke (24) ermittelt und eingestellt wird.

10. Verfahren nach einem der vorhergehenden Ansprüche, **dadurch gekennzeichnet, dass** die relative Soll-Stellung des Stellorgans (40) bestimmt wird nach

$$Pos\text{-}soll_{Ventil} = P \times (T_{Raumsoll} - T_{Außen}) / T_{Vorlaufsoll}$$

mit

Pos-soll$_{Ventil}$ = relative Soll-Stellung eines einen Durchfluss durch die Wärmesenke beeinflussenden Stellorgans
P = die Umgebung des mindestens einen Raumes berücksichtigender Parameter
$T_{Vorlaufsoll}$ = Vorlaufsolltemperatur
$T_{Raumsoll}$ = Raumsolltemperatur
$T_{Außen}$ = Außentemperatur

11. Verfahren nach einem der vorhergehenden Ansprüche, **dadurch gekennzeichnet, dass** die relative Soll-Stellung des Stellorgans (40) unterschiedlicher Räume (29) bestimmt wird nach

$$\text{Pos-soll}_{\text{Ventil}}(n) = (T_{\text{Vorlaufsoll}}(n) - T_{\text{Raum}}(n)) / (\max(T_{\text{Vorlaufsoll}}(n)) - T_{\text{Raum}}(n))$$

mit

n = Nummerierung der Räume, n ist eine natürliche Zahl
$T_{\text{Vorlaufsoll}}(n)$ = Vorlaufsolltemperatur für den Raum mit der Nummer n
$T_{\text{Raum}}(n)$ = aktuelle Raumtemperatur des Raumes mit der Nummer n
$\max(T_{\text{Vorlaufsoll}}(n))$ = maximale Vorlauftemperatur ermittelt aus den Vorlauftemperaturen der Räume 1 bis n

**12.** Verfahren nach einem der vorhergehenden Ansprüche, **dadurch gekennzeichnet, dass** die relative Soll-Stellung des Stellorgans (40) unterschiedlicher Räume (29) bestimmt wird nach

$$\text{Pos-soll}_{\text{Ventil}}(n) = (T_{\text{Vorlaufsoll}}(n) - T_{\text{Raum}}(n)) / (T_{\text{Vorlaufsoll}}(n) - T_{\text{Raum}}(n))$$

mit

n = Nummerierung der Räume, n ist eine natürliche Zahl
$T_{\text{Vorlaufsoll}}(n)$ = Vorlaufsolltemperatur für den Raum mit der Nummer n
$T_{\text{Raum}}(n)$ = aktuelle Raumtemperatur des Raumes mit der Nummer n
$T_{\text{Vorlaufsoll}}(n)$ = aktuelle Vorlauftemperatur des Raumes mit der Nummer n

**13.** Regeleinheit zum Regeln eines Heizkreises (22), der zumindest eine Wärmequelle (17) und zumindest eine in mindestens einem Raum (29) angeordnete Wärmesenke (24) aufweist, wobei die Regeleinheit (20) einen Geber (48) aufweist und/oder mit einem Geber (48) verbunden ist, der einen Wert für eine Außentemperatur ($T_{\text{Außen}}$) zur Verfügung stellt und wobei die Regeleinheit (20) eine Vorlauftemperatur ($T_{\text{Vorlauf}}$) abhängig von der Außentemperatur ($T_{\text{Außen}}$) steuert oder regelt,
**dadurch gekennzeichnet, dass**
die Regeleinheit (20) einen weiteren Geber (50) aufweist und/oder mit einem weiteren Geber (50) verbunden ist, der einen Wert für eine Raumtemperatur ($T_{\text{Raum}}$) zur Verfügung stellt, und dass die Regeleinheit (20) die Vorlauftemperatur ($T_{\text{Vorlauf}}$) abhängig von der Außentemperatur ($T_{\text{Außen}}$) und der Raumtemperatur ($T_{\text{Raum}}$), nach einem Verfahren nach einem der vorhergehenden Ansprüche, steuert oder regelt.

**14.** Regeleinheit nach Anspruch 13, **dadurch gekennzeichnet, dass** die Regeleinheit (20) mit einem oder mehreren Aktoren verbunden ist und eine relative Stellung eines einen Durchfluss durch die Wärmesenke (24) beeinflussenden Stellorgans (40) steuert oder regelt.

## Claims

**1.** Method for regulating a feed temperature ($T_{\text{feed}}$) in a heating circuit (22) which has at least one heat source (17) and at least one heat sink (24) arranged in at least one room (29), wherein the feed temperature ($T_{\text{feed}}$) is controlled or regulated depending on an external temperature ($T_{\text{external}}$),
wherein the room temperature ($T_{\text{room}}$) is measured in the room (29) and wherein the feed temperature ($T_{\text{feed}}$) is controlled or regulated depending on the external temperature ($T_{\text{external}}$) and the room temperature ($T_{\text{room}}$), **characterized in that** a parameter (P) taking into account the area surrounding the at least one room (29) is determined and is included during the control or regulation, and **in that** the parameter (P) is dependent on the ratio of coefficients of heat transfer of the outer surfaces of the room (29) and of the heat sinks (24) on one hand and on the size of the outer surfaces of the room (29) and the area of the heat sink (24) on the other.

**2.** Method according to Claim 1, **characterized in that** the parameter (P) is determined during stationary operation.

**3.** Method according to either of Claims 1 and 2, **characterized in that** the parameter (P) is determined in accordance with

$$P = (\text{POS}_{\text{valve}} \times (T_{\text{feed}} - T_{\text{room}})) / (T_{\text{room}} - T_{\text{external}})$$

where

$T_{room}$ = room temperature
$T_{external}$ = external temperature
$T_{feed}$ = feed temperature
$Pos_{valve}$ = relative position of an actuating element influencing a throughflow through the heat sink.

**4.** Method according to any of the preceding claims, **characterized in that** a feed setpoint temperature ($T_{feed\ setpoint}$) is determined in accordance with

$$T_{feed\ setpoint} = T_{room\ setpoint} + ((T_{room} - T_{external}) \ x \ (k_G \ x \ A_G)) \ / \ ((k_V \ x \ A_V) \ x \ Pos\text{-}target_{valve})$$

where

$T_{feed\ setpoint}$ = feed setpoint temperature
$T_{room\ setpoint}$ = room setpoint temperature
$T_{external}$ = external temperature
$Pos\text{-}target_{valve}$ = relative target position of an actuating element influencing a throughflow through the heat sink
$k_V$ = coefficients of heat transfer of the outer surfaces
$A_V$ = area of the external surfaces
$k_G$ = coefficients of heat transfer of the heat sinks
$A_G$ = area of the heat sinks.

**5.** Method according to any of Claims 1 to 3, **characterized in that** a feed setpoint temperature ($T_{feed\ setpoint}$) is determined in accordance with

$$T_{feed\ setpoint} = P \ x \ ((T_{room\ setpoint} - T_{external}) \ / \ Pos\text{-}target_{valve})$$

where

$T_{feed\ setpoint}$ = feed setpoint temperature
$T_{room\ setpoint}$ = room setpoint temperature
$T_{external}$ = external temperature
$Pos\text{-}target_{valve}$ = relative target position of an actuating element influencing a throughflow through the heat sink

**6.** Method according to any of the preceding claims, **characterized in that** a plurality of rooms (29) with a plurality of heat sinks (24) are controlled or regulated, wherein a room (29) is controlled or regulated according to one of the preceding claims and an additional room or a plurality of additional rooms (29) are regulated such that the relative position of a respective actuating element (40) of the heat sink (24) in the rooms is controlled or regulated depending on the determined feed temperature ($T_{feed}$) .

**7.** Method according to any of the preceding claims, **characterized in that** a feed setpoint temperature ($T_{feed\ setpoint}$) is determined for each of a plurality of rooms (29) to be regulated.

**8.** Method according to Claim 7, **characterized in that** a maximum feed setpoint temperature ($T_{feed\ setpoint}$) is ascertained.

**9.** Method according to either of Claims 7 and 8, **characterized in that** a relative setpoint position of an actuating element (40) of the heat sink (24) is ascertained and set for rooms to be regulated starting from a predetermined feed setpoint temperature ($T_{feed\ setpoint}$), in particular a maximum feed setpoint temperature or a current feed temperature.

**10.** Method according to any of the preceding claims, **characterized in that** the relative setpoint position of the actuating element (40) is determined in accordance with

$$\text{Pos-setpoint}_{\text{valve}} = P \times (T_{\text{room setpoint}} - T_{\text{external}}) / T_{\text{feed setpoint}}$$

where

$\text{Pos-setpoint}_{\text{valve}}$ = relative setpoint position of an actuating element influencing a throughflow through the heat sink

P = parameter taking into account the area surrounding the at least one room

$T_{\text{feed setpoint}}$= feed setpoint temperature

$T_{\text{room setpoint}}$ = room setpoint temperature

$T_{\text{external}}$ = external temperature

11. Method according to any of the preceding claims, **characterized in that** the relative setpoint position of the actuating element (40) of different rooms (29) is determined in accordance with

$$\text{Pos-setpoint}_{\text{valve}}(n) = (T_{\text{feed setpoint}}(n) - T_{\text{room}}(n)) / (\max(T_{\text{feed setpoint}}(n)) - T_{\text{room}}(n))$$

where

n = numbering of the rooms, n is a natural number

$T_{\text{feed setpoint}}$ (n) = feed setpoint temperature for the room with the number n

$T_{\text{room}}$ (n) = current room temperature of the room with the number n

$\max(T_{\text{feed setpoint}}$ (n)) = maximum feed temperature ascertained from the feed temperatures of the rooms 1 to n.

12. Method according to any of the preceding claims, **characterized in that** the relative setpoint position of the actuating element (40) of different rooms (29) is determined in accordance with

$$\text{Pos-setpoint}_{\text{valve}}(n) = (T_{\text{feed setpoint}}(n) - T_{\text{room}}(n)) / (T_{\text{feed setpoint}}(n) - T_{\text{room}}(n))$$

where

n = numbering of the rooms, n is a natural number

$T_{\text{feed setpoint}}$ (n) = feed setpoint temperature for the room with the number n

$T_{\text{room}}$ (n) = current room temperature of the room with the number n

$T_{\text{feed setpoint}}$ (n) = current feed temperature of the room with the number n.

13. Regulating unit for regulating a heating circuit (22) which has at least one heat source (17) and at least one heat sink (24) arranged in at least one room (29), wherein the regulating unit (20) has a sensor (48) and/or is connected to a sensor (48) which provides a value for an external temperature ($T_{\text{external}}$) and wherein the regulating unit (20) controls or regulates a feed temperature ($T_{\text{feed}}$) depending on the external temperature ($T_{\text{external}}$), **characterized in that** the regulating unit (20) has a further sensor (50) and/or is connected to a further sensor (50) which provides a value for a room temperature ($T_{\text{room}}$), and **in that** the regulating unit (20) controls or regulates the feed temperature ($T_{\text{feed}}$) depending on the external temperature ($T_{\text{external}}$) and the room temperature ($T_{\text{room}}$), in accordance with a method according to one of the preceding claims.

14. Regulating unit according to Claim 13, **characterized in that** the regulating unit (20) is connected to one or more actuators and controls or regulates a relative position of an actuating element (40) influencing a throughflow through the heat sink (24).

**Revendications**

1. Procédé de régulation d'une température de départ ($T_{\text{Vorlauf}}$) dans un circuit de chauffage (22), qui possède au moins une source de chaleur (17) et au moins un puits de chaleur (24) disposé dans au moins une pièce (29), la température de départ ($T_{Vorlauf}$) étant commandée ou régulée en fonction d'une température extérieure ($T_{Außen}$), la température ambiante ($T_{Raum}$) étant mesurée dans la pièce (29) et la température de départ ($T_{Vorlauf}$) étant commandée ou régulée en fonction de la température extérieure ($T_{Außen}$) et de la température ambiante ($T_{Raum}$), **caractérisé en ce qu'**un paramètre (P) tenant compte de l'environnement de l'au moins une pièce (29) est déterminé et intervient lors de la commande ou de la régulation, et **en ce que** le paramètre (P) dépend du rapport entre les coefficients de transmission thermique des surfaces extérieures de la pièce (29) et des puits de chaleur (24) d'une part, et de la taille des surfaces extérieures de la pièce (29) et de la superficie du puits de chaleur (24) d'autre part.

2. Procédé selon la revendication 1, **caractérisé en ce que** le paramètre (P) est déterminé pendant un fonctionnement stationnaire.

3. Procédé selon l'une des revendications 1 ou 2, **caractérisé en ce que** le paramètre (P) est déterminé d'après

$$P = (POS_{Ventil} \times (T_{Vorlauf} - T_{Raum})) / (T_{Raum} - T_{Außen})$$

où

$T_{Raum}$ = température ambiante
$T_{Außen}$ = température extérieure
$T_{Vorlauf}$ = température de départ
$Pos_{Ventil}$ = position relative d'un organe de réglage qui influence un débit à travers le puits de chaleur.

4. Procédé selon l'une des revendications précédentes, **caractérisé en ce qu'**une température de départ de consigne ($T_{Vorlaufsoll}$) est déterminée d'après

$$T_{Vorlaufsoll} = T_{Raumsoll} + ((T_{Raum} - T_{Außen}) \times (k_G \times A_G)) / ((k_V \times A_V) \times Pos\text{-}Ziel_{Ventil})$$

où

$T_{Vorlaufsoll}$ = température de départ de consigne
$T_{Raumsoll}$ = température ambiante de consigne
$T_{Außen}$ = température extérieure
$Pos\text{-}Ziel_{Ventil}$ = position cible relative d'un organe de réglage qui influence un débit à travers le puits de chaleur
$k_V$ = coefficients de transmission thermique des surfaces extérieures
$A_V$ = superficie des surfaces extérieures
$k_G$ = coefficients de transmission thermique des puits de chaleur
$A_G$ = superficie des puits de chaleur.

5. Procédé selon l'une des revendications 1 à 3, **caractérisée en ce qu'**une température de départ de consigne ($T_{Vorlaufsoll}$) est déterminée d'après

$$T_{Vorlaufsoll} = P \times ((T_{Raumsoll} - T_{Außen}) / Pos\text{-}Ziel_{Ventil})$$

où

$T_{Vorlaufsoll}$ = température de départ de consigne
$T_{Raumsoll}$ = température ambiante de consigne
$T_{Außen}$ = température extérieure
$Pos\text{-}Ziel_{Ventil}$ = position cible relative d'un organe de réglage qui influence un débit à travers le puits de chaleur

6. Procédé selon l'une des revendications précédentes, **caractérisé en ce que** plusieurs pièces (29) comportant plusieurs puits de chaleur (24) sont commandées ou régulées, une pièce (29) étant commandée ou régulée selon l'une des revendications précédentes et une ou plusieurs pièces supplémentaires (29) étant régulées de telle sorte que leur position relative d'un organe de réglage (40) respectif du puits de chaleur (24) est commandée ou régulée en fonction de la température de départ ($T_{Vorlauf}$) déterminée.

7. Procédé selon l'une des revendications précédentes, **caractérisé en ce qu'**une température de départ de consigne ($T_{Vorlaufsoll}$) est déterminée pour plusieurs pièces (29) à réguler.

8. Procédé selon la revendication 7, **caractérisé en ce qu'**une température de départ de consigne maximale ($T_{Vorlaufsoll}$) est identifiée.

9. Procédé selon l'une des revendications 7 ou 8, **caractérisé en ce qu'**une position de consigne relative d'un organe de réglage (40) du puits de chaleur (24) est identifiée et réglée pour les pièces à réguler à partir d'une température de départ de consigne ($T_{Vorlaufsoll}$), notamment une température de départ de consigne maximale ou une température de départ actuelle.

10. Procédé selon l'une des revendications précédentes, **caractérisé en ce que** la position de consigne relative de l'organe de réglage (40) est déterminée d'après

$$\text{Pos-soll}_{Ventil} = P \text{ x } (T_{Raumsoll} - T_{Außen}) / T_{Vorlaufsoll}$$

où

Pos-soll$_{Ventil}$ = position de consigne relative d'un organe de réglage qui influence un débit à travers le puits de chaleur

P = paramètre prenant en compte l'environnement de l'au moins une pièce

$T_{Vorlaufsoll}$= température de départ de consigne

$T_{Raumsoll}$ = température ambiante de consigne

$T_{Außen}$ = température extérieure

11. Procédé selon l'une des revendications précédentes, **caractérisé en ce que** la position de consigne relative de l'organe de réglage (40) de différentes pièces (29) est déterminée d'après

$$\text{Pos-soll}_{Ventil}(n) = (T_{Vorlaufsoll}(n) - T_{Raum}(n)) / (\max(T_{Vorlaufsoll}(n)) - T_{Raum}(n))$$

où

n = numérotation des pièces, n étant un nombre naturel

$T_{Vorlaufsoll}$ (n) = température de départ de consigne pour la pièce ayant le numéro n

$T_{Raum}$(n) = température ambiante actuelle de la pièce ayant le numéro n

max ($T_{Vorlaufsoll}$(n)) = température de départ maximale déterminée à partir des températures de départ des pièces 1 à n.

12. Procédé selon l'une des revendications précédentes, **caractérisé en ce que** la position de consigne relative de l'organe de réglage (40) de différentes pièces (29) est déterminée d'après

$$\text{Pos-soll}_{Ventil}(n) = (T_{Vorlaufsoll}(n) - T_{Raum}(n)) / (T_{Vorlaufsoll}(n) - T_{Raum}(n))$$

où

n = numérotation des pièces, n étant un nombre naturel

$T_{Vorlaufsoll}$(n) = température de départ de consigne pour la pièce ayant le numéro n

$T_{Raum}$(n) = température ambiante actuelle de la pièce ayant le numéro n

$T_{Vorlaufsoll}$(n) = température de départ actuelle de la pièce ayant le numéro n

**EP 3 739 267 B1**

13. Unité de régulation destinée à réguler un circuit de chauffage (22) qui possède au moins une source de chaleur (17) et au moins un puits de chaleur (24) disposé dans au moins une pièce (29), l'unité de régulation (20) possédant un transmetteur (48) et/ou étant reliée à un transmetteur (48) qui met à disposition une valeur pour une température extérieure ($T_{Außen}$) et l'unité de régulation (20) commandant ou régulant une température de départ ($T_{Vorlauf}$) en fonction de la température extérieure ($T_{Außen}$),
**caractérisée en ce que**
l'unité de régulation (20) possède un transmetteur supplémentaire (50) et/ou est reliée à un transmetteur supplémentaire (50) qui met à disposition une valeur pour une température ambiante ($T_{Raum}$), et **en ce que** l'unité de régulation (20) commande ou régule la température de départ ($T_{Vorlauf}$) en fonction de la température extérieure ($T_{Außen}$) et de la température ambiante ($T_{Raum}$), conformément un procédé selon l'une des revendications précédentes.

14. Unité de régulation selon la revendication 13, **caractérisée en ce que** l'unité de régulation (20) est reliée à un ou plusieurs actionneurs et commande ou régule une position relative d'un organe de réglage (40) qui influence un débit à travers le puits de chaleur (24) .

16

Fig. 1

EP 3 739 267 B1

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3300082 A1
- AT 412819 B

- EP 1300634 A1
- DE 102005033497 B3